# EUROPEAN PATENT APPLICATION

(11) **EP 2 986 084 A1**
(43) Date of publication of application: **17.02.2016**
(21) Application number: 13881875.2
(22) Date of filing: 31.05.2013
(51) Int. Cl.: H05B 37/00

(54) **LED LIGHTING DEVICE AND LED LIGHTING CONTROL SYSTEM**

(30) Priority: 11.04.2013 CN 201310126154
(71) Applicant: Zhejiang Shenghui Lighting Co., Ltd, Jiaxing, Zhejiang 314015 (CN)
(72) Inventor: RUAN, Jiayang, Jiaxing Zhejiang 314015 (CN); SUN, Chaoqun, Jiaxing Zhejiang 314015 (CN); SHEN, Jinxiang, Jiaxing Zhejiang 314015 (CN)
(74) Representative: Jöstingmeier, Martin
(86) International application number: PCT/CN2013/076563
(87) International publication number: WO 2014/166148

(57) **Abstract**

Provided are an LED lighting device and an LED lighting control system. The LED lighting device is used for communicating with an intelligent terminal and comprises an LED drive and power supply unit, a controller unit, a microphone module, a wireless communication module, and an LED light source component. The LED lighting control system comprises an intelligent terminal, an intelligent household appliance, and at least one LED lighting device described above. A voice recognition module and a wireless transceiver module are arranged in the intelligent terminal, and a wireless receiving module in network connection to the intelligent terminal is arranged in the intelligent household appliance. A user sends a sound instruction to the LED lighting device, the LED lighting device collects an audio signal, the audio signal is processed and then sent to the intelligent terminal, and the intelligent terminal recognizes and processes the audio signal and then sends the audio signal to a corresponding intelligent household appliance in network connection to the intelligent terminal, so as to control a state of the intelligent household appliance. With the LED lighting device and the LED lighting control system, current wiring does not need to be changed, mounting is simple and convenient, and using is convenient.

## Description

### FIELD OF THE DISCLOSURE

The present disclosure relates to the field of LED (light emitting diode) lighting technology and, more particularly, relates to an LED lighting device and an LED lighting control system.

### BACKGROUND

The occurrence of wireless technology frees people from cumbersome cabling and assembly, wireless technology has been applied to various electronic products, with the people's living standards improving day by day, this type of products has become popular. Because of many advantages provided by LED such as energy conservation, environmental protection, controllable lighting, solid state lighting, and long operational lifetime, LED devices have been widely used in various areas such as public lighting in cities, commercial and indoor lighting, etc.

An example of currently existing smart home control systems is Chinese Patent No.: 2012204629998, which discloses a smart home control device based on the internet of things. Such smart home control device includes: a home gateway connected to an external network. The home gateway is connected to one or more of a home central controller, an audio-video capturing controller, an access controller, a lighting controller, a home appliance controller, a home environment sensor, a home alarm, an actuator, and a network connector, via a wired and/or wireless network. By configuring a variety of sensors, controllers, actuators, and identification devices, related to home appliances and home furnishings, and by physical connections of wired/wireless networks, automated control and manual control in real-time of household goods can be realized.

However, existing smart home control systems may not meet the needs of more occasions. In addition, individual configurations of various controllers and sensors need to be individually cabled with complicated installation and with high cost.

### BRIEF SUMMARY OF THE DISCLOSURE

### Technical solutions

The present disclosure overcomes disadvantages in the above-described prior art, and provides an LED lighting device and an LED lighting control system with easy installation, low cost, and ease for use, and with no need to change current wiring manner.

The technical solution of the present disclosure is achieved by:
An LED lighting device for communicating with a smart terminal, including:
   at least one LED drive and power supply unit configured to drive LED light source assembly and to provide power to the LED lighting device;
   at least one controller unit configured to process data of an audio signal or a control signal and to provide controls corresponding to the control signal;
   at least one microphone module connected to the controller unit to capture ambient sounds as the audio signal to send to the controller unit for processing;
   at least one wireless communication module connected to the controller unit to receive the audio signal processed by the controller unit and to send the processed audio signal to the smart terminal; and
   at least one LED light source assembly configured to provide lighting and to receive the control signal sent from the controller unit and to adjust according to the control signal.

Optionally, the controller unit includes one or more of a microcontroller, a digital signal processor, and a digital integrated circuit controller, configured to process inputted audio signals using algorithms.

Optionally, the wireless communication module supports a frequency band including 2.4 GHz, 5.2 GHz, 5.8 GHz, and a combination thereof.

An LED lighting control system is provided to include a smart terminal, a smart home appliance, and at least one LED lighting device disclosed herein. The smart terminal includes a voice recognition module and a wireless transceiver module. The smart home appliance includes a wireless receiver module networked with the smart terminal. A user sends a voice command to the LED lighting device, the LED lighting device captures and processes audio signals of the voice command to send to the smart terminal. The smart terminal then recognize and process the audio signals to send to a corresponding smart home appliance networked with the smart terminal to control a status of the smart home appliance.

Optionally, the smart terminal is a gateway controller.

Optionally, the smart terminal is a mobile phone or a computer.

### Advantageous effects

Mechanism and advantageous effects of the present disclosure for applying the above-described technical solutions include:
Compared with current technology, the disclosed LED lighting device provides easy installation and ease for use, and with no need to change current wiring manner, supports wireless dimming and provides regular lighting. In addition, the disclosed LED lighting device may be built-in with a microphone module. In a space installed with the disclosed LED lighting device, when audio signals sent by a user is captured by the microphone module and then sent to the controller unit for processing, and then sent to the smart terminal via the wireless communication module, the smart terminal can identify and process the audio signals, and send a signal to all of the smart home appliances that are networked with the smart terminal, thus controlling smart home appliances can be achieved at the same time with providing lighting.

### BRIEF DESCRIPTION OF THE DRAWINGS

FIG. 1 is a schematic illustrating an LED lighting device of the present disclosure ; and
FIG. 2 is a schematic illustrating an LED lighting control system of the present disclosure.

### DETAILED DESCRIPTION

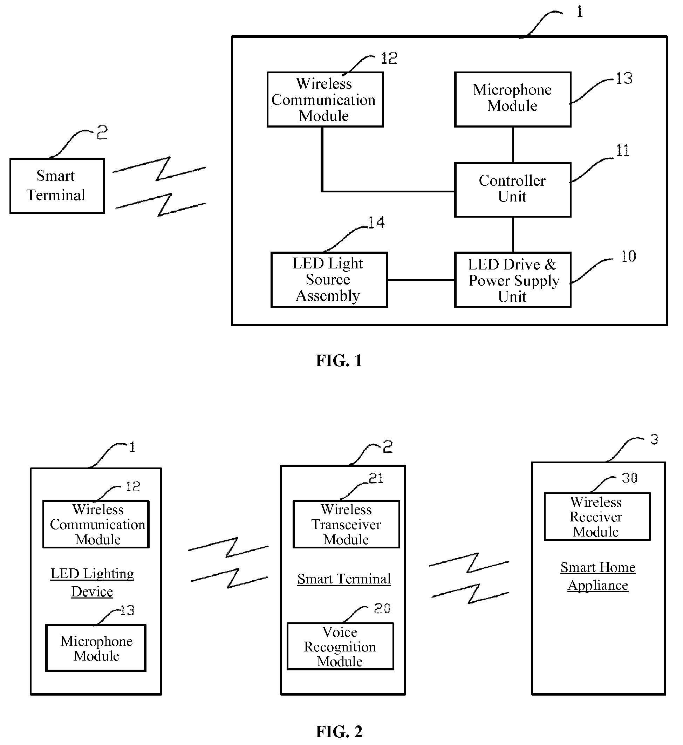

The detailed embodiments of the present disclosure are as follows:
Embodiment: FIG. 1 is a schematic illustrating an LED lighting device of the present disclosure. As shown in FIG. 1, the disclosed LED lighting device 1 includes an LED drive and power supply unit 10, a controller unit 11, a wireless communication module 12, a microphone module 13, and an LED light source assembly 14. The LED drive and power supply unit 10 drives the LED light source assembly 14, and to supply power to the entire LED lighting device 1.

The controller unit 11 includes a digital signal processor, a microcontroller, or a digital IC (i.e., integrated circuit) controller, and/or a combination thereof, and may algorithmically process inputted audio signal(s). The microphone module 13 can capture audio signal from a user, which is then processed by the controller unit 11, and sent out by the wireless communication module 12.

In the present embodiment, the wireless communication module 12 can support one or more frequency bands including 4 GHz, 5.2 GHz, and 5.8 GHz. In addition, the wireless communication module 12 can be connected to the Internet and can also be remotely controlled.

The LED drive and power supply unit 10 can drive the LED light source assembly 14. The controller unit 11 can generate a PWM signal for dimming adjustments. The controller unit 11 can be directly connected to the LED drive and power supply unit 10. The controller unit 11 can be set to output a PWM signal, and can also set the PWM signal with a constant frequency and an adjustable duty cycle, or a constant duty cycle and an adjustable frequency.

FIG. 2 is a schematic illustrating an LED lighting control system of the present disclosure. As shown in FIG. 2, the disclosed smart home control system includes a smart terminal 2, a smart home appliance 3, and at least one LED lighting device 1. The smart terminal 2 is provided with a voice recognition module 20 and a wireless transceiver module 21. The smart home appliance 3 is provided with a wireless receiver module 30 networked with the smart terminal 2. In the present embodiment, the smart terminal 2 can be a gateway controller.

A user can directly send voice commands to the LED lighting device 1. The microphone module 13 in the LED lighting device 1 can capture audio signals, which can then be processed by the controller unit 11 and sent to the smart terminal 2 via the wireless communication module 12. Because the smart terminal 2 has been built-in with the voice recognition module 20, the user's voice commands can be recognized and processed by the voice recognition module 20, and sent to all smart home appliances 3 (e.g., white and black appliances) that are networked with the smart terminal 2 via the wireless transceiver module 21 to control status of the smart home appliances 3. In this manner, a control system can be provided using the disclosed LED lighting device to control smart home appliances.

In addition, the smart terminal in the disclosed LED lighting control system can be a fixed gateway controller. Alternatively, a mobile phone, a computer and other devices can replace the gateway controller, thus using the mobile phone, the computer and other devices to check status and to remotely control the smart home appliances can be achieved.

## Claims

1. An LED lighting device for communicating with a smart terminal, comprising:
at least one LED drive and power supply unit configured to drive LED light source assembly and to provide power to the LED lighting device;
at least one controller unit configured to process data of an audio signal or a control signal and to provide controls corresponding to the control signal;
at least one microphone module connected to the controller unit to capture ambient sounds as the audio signal to send to the controller unit for processing;
at least one wireless communication module connected to the controller unit to receive the audio signal processed by the controller unit and to send the processed audio signal to the smart terminal, and
at least one LED light source assembly configured to provide lighting and to receive the control signal sent from the controller unit and to adjust according to the control signal.

2. The device according to claim 1, **characterized in that** the at least one controller unit includes one or more of a microcontroller, a digital signal processor, and a digital integrated circuit controller, configured to process the audio signal using algorithms.

3. The device according to claim 1, **characterized in that** the at least one wireless communication module supports a frequency band including 2.4 GHz, 5.2 GHz, 5.8 GHz, and a combination thereof.

4. An LED lighting control system, **characterized by** comprising:
a smart terminal;
a smart home appliance; and
at least one LED lighting device comprising the device according to claim 1,
wherein:
the smart terminal comprises a voice recognition module and a wireless transceiver module,
the smart home appliance comprises a wireless receiver module networked with the smart terminal, wherein, when a user sends a voice command to the LED lighting device, the LED lighting device captures and processes audio signals of the voice command to send to the smart terminal, and the smart terminal then recognize and process the audio signals to send to a corresponding smart home appliance networked with the smart terminal to control a status of the smart home appliance.

5. The system according to claim 4, **characterized in that** the smart terminal is a gateway controller.

6. The system according to claim 4, **characterized in that** the smart terminal is a mobile phone or a computer.
